# EUROPEAN PATENT SPECIFICATION

(11) **EP 3 831 580 B1**
(45) Date of publication and mention of the grant of the patent: **24.07.2024**
(21) Application number: 20211023.5
(22) Date of filing: 01.12.2020
(51) Int. Cl.: B29C 65/10, B29C 65/48, B29C 65/50, B29C 65/74, B65H 21/00, B65H 37/04

(54) **SPLICE TABLE WITH SEALER TROLLEY AND SPLICING METHOD**
SPLEISSTISCH MIT VERSIEGELUNGSWAGEN UND SPLEISSVERFAHREN
TABLE D'ÉPISSAGE AVEC CHARIOT DE SCELLAGE ET PROCÉDÉ D'ÉPISSAGE

(30) Priority: 06.12.2019 EP 19214212
(43) Date of publication of application: 09.06.2021
(73) Proprietor: Tetra Laval Holdings & Finance S.A., 1009 Pully (CH)
(72) Inventor: Leufstadius, Emanuel, 21742 Malmö (SE); PERSSON, Alexander, 22352 Lund (SE)
(74) Representative: Tetra Pak - Patent Attorneys SE

(56) References cited:
- WO-A1-2015/173122
- DE-A1- 10 226 148

## Description

### Technical Field

The present disclosure relates to a sealer trolley, a splice table and a method for combining the ends of two webs of packaging material, referred to as splicing of packaging material.

### Background Art

Packaging material, in particular packaging laminate comprising a core of fibrous material, such as paper board or carton board is manufactured in sequential steps. The order of the steps, as well as the contents of a particular step may vary, yet as an example the process may start with the production of the board.

The board is produced in a paper mill and rolled onto large-sized rolls and shipped to a converting facility. In the converting facility the large-size rolls are unrolled and additional layers, usually plastics and/or aluminium foil, is extruded (or laminated) onto the surfaces of the board, and rolled onto a new roll. In the same, or in a previous or a subsequent step, the web of material may also be provided with a suitable décor and crease lines, i.e. weakening lines providing guides when a subsequent packaging container is to be folded.

At some step during the process, the first large-size roll is divided into multiple rolls in a width direction. The resulting rolls may typically have a width corresponding to a crease pattern in a first direction for a single packaging container and a length corresponding to the crease patterns in a second direction for a specific number of packaging containers. The specific number is typically thousands of packaging containers, but there is obviously a maximum amount of packaging containers that could be fitted onto a single roll.

Splicing of the web can be applied in many different steps during manufacturing of rolls of packaging material, i.e. splicing can be performed on full-width webs in the converting facility, or on single package-width webs after cutting of the full-width webs. Typical examples are when an additional length of packaging material has to be added to an existing roll, and when a portion of the web has been removed since it contains a defect. The latter is often referred to as "doctoring".

Packs for liquid foods, for example juices or milk, are known as comprising plastic-coated paper, cardboard or generally a coated fibre layer. During production of the packaging material, a web material is arranged on a roll. Thus, the individual rolls comprise a wound material web which is previously embossed, stamped, laminated and so forth. When the individual roll is exhausted, either during converting or during operation of a subsequent filling machine, a reserve roll must be in readiness in good time and the trailing edge of the 'old' material web of the exhausted individual roll must be joined to the pre-prepared leading edge of the new individual roll. That method of joining the two material webs is also referred to as 'splicing'.

EP1184311 discloses a method of providing one of the two edges of the material webs with an inclined cut and then, with the acutely terminating edge of the material web being bent over, gluing it in such a way that a liquid-tight weld is provided on the product side. In that way the originally open surface of the fibre layer is covered by plastic material and liquid-tightly welded.

Gluing the trailing edge of a material web roll to the leading transverse edge of the reserve material web roll requires pressure and heat to be applied in the correct amount and at the right time to the complete width of the edge of a material web in such a way as to produce an adhesive join of good quality and with good liquid-tight sealing integrity.

Further, correct positioning of the leading edge of the reserve material web is of outmost importance, both in terms of longitudinal, transverse, and angular alignment.

The prior art successfully provides a liquid-tight weld. However, using the above as a starting point there are still improvements to be made. The outside layer of the weld has a trailing end with a right angle, which may get caught on sharp edges, possibly weakening the integrity of the packaging container. Further, the trailing end is usually cut by a circular knife, which generates dust and residue that may cause stoppage. In that context it should be stated that any improvement in the area of splicing and similar operations may have a direct impact on the time spent on the operation, on the quality of the result on the amount of waste generated in downstream processes, etc.

DE10226148A1 discloses a device for gluing together two webs of packaging material used for producing liquid-tight packages, at least one face of each web being coated with a liquid-tight, heat-activated adhesive layer. Said device comprises means for clamping the webs of material, a cutting mechanism for making a diagonal cut that runs approximately perpendicular to the web of material, and a welding unit applying heat and pressure for gluing together the webs of material along an adhesive strip. In order to provide the effective face of the web of material with an effective adhesive spot which is of sufficient quality and ensures improved and more reliable liquid tightness when an empty roll is replaced by a new, full roll, the welding unit is provided with a carriage which is movable along a transverse rail that runs approximately perpendicular to the direction of conveyance of the web of material and on which a heater and a pressing roller that is arranged behind said heater in the moving direction are disposed.

WO2015173122A1 discloses a method for splicing a web of packaging material, comprising: guiding the web of packaging material through a splicing device comprising one or more imaging devices, a slitter, and a sealing unit; acquiring a first set of images of one or more areas of the packaging material, storing the acquired first set of images, slitting the web of packaging material in one or more locations to form a tail end and a head end of a web of packaging material, aligning the head end and the tail end and superimpose one on the other in preparation for forming a splice, utilizing the imaging devices and the stored acquired first set of images to fine tune the alignment of the head end and the tail end, sealing the splice.

The present disclosure aims at providing a new device and method for splicing, having the purpose of providing a high consistent performance and increased efficiency.

### Summary

It is an object of the invention to at least partly overcome one or more of the above-identified limitations of the prior art. In particular, it is an object to improve the cut of the end of the outside layer of the weld.

According to a first aspect of the invention, the above and other objects of the invention are achieved by a splice table comprising a sealer trolley according to claim 1. The sealer trolley is configured to seal an incoming web of packaging material to an existing web of packaging material during a splicing operation. The sealer trolley comprises a cutting unit with a blade arranged to cut the incoming web of packaging material at a slanted angle, and specifically the cutting unit comprises a razor blade.

Here the slanted angle is particularly an angle in relation to a thickness direction of the web.

The sealer trolley of the splice unit is advantageous in that the slanted cut allow for improved sealing and increases the integrity of the packaging container, additionally the blade generates less dust than the prior art.

The sealer trolley of the splice unit may comprise a motor for automatically moving the sealer trolley along the entire width of the incoming web of packaging material. The motor is advantageous in that it is convenient and safe in that it reduces the possibility for human error and it may move at a precise speed which optimises the quality of the weld.

The sealer trolley of the splice unit may comprise a heating unit. The heating unit is advantageous in that it may be arranged to heat the web(s) of packaging material to a specific temperature where the plastic of the web(s) become adhesive, thereby improving the seal.

The sealer trolley of the splice unit may comprise a pressure unit. The pressure unit is advantageous in that it may improve the quality of the weld and keep the webs aligned.

The pressure unit may be a wheel arranged to roll along the direction of movement of the sealer trolley. The wheel is advantageous in that it is simple to construct and provides an even pressure, it may even be used to move the sealer trolley.

The razor blade is advantageous in that it provides a clean cut without creating much dust or residue.

The slanted angle may be 10-20 degrees, preferably 15 degrees. These angles are advantageous in that they have shown to provide the best weld quality.

The sealer trolley of the splice unit may be configured to be selectively arranged in an active position where the cutting unit is arranged to cut the incoming web of packaging material and a passive position where the cutting unit is arranged at a distance from the incoming web of packaging material. The different positions are advantageous in that they allow the operator(s) of the splice table to know when the sealer trolley needs full attention.

The sealer trolley of the splice unit may be configured to be arranged in the active position when moving in one direction along the width of the incoming web of packaging material, and in the passive position when moving in the opposite direction along the width of the incoming web of packaging material. The different positions are advantageous in that they allow the sealer trolley to only need to be able to cut in one direction without worrying that an inadvertent cut will occur when moving in an opposite direction.

The splice table may comprise a cutting device arranged to cut the existing web of packaging material at a slanted angle. The slanted cut is advantageous in that it increases the integrity of the packaging container.

Here the slanted angle is particularly an angle in relation to a thickness direction of the web.

The cutting device may be manually operated. The manual operation is advantageous in that it may be faster and more precise at this manufacturing step.

The splice table may comprise at least one locking unit configured to lock the position of at least one web of packaging material. The locking unit is advantageous in that it keeps the web(s) of packaging material in place once aligned.

The splice table may comprise at least one anvil unit arranged along the running path of the sealer trolley and being configured to receive pressure from a pressure unit of the sealer trolley. The anvil unit is advantageous in that it allows for the pressure unit to apply a suitable amount of pressure.

The anvil unit may be slanted in order to guide at least one web of packaging material as the pressure unit applies pressure. The slant is advantageous in that it allows the pressure to be more precisely applied.

The anvil unit may be aligned with the transversal edge of at least one web of packaging material. The alignment is advantageous in that it provides improved pressure to the sealing.

According to a second aspect of the invention, a method for splicing an incoming web of packaging material to an existing web of packaging material according to claim 13 is provided. The method comprises the steps of cutting the incoming web of packaging material at a slanted angle; and sealing the two webs of packaging material.

The method is advantageous in that the slanted cut increases the integrity of the packaging container.

The method may comprise a step of heating at least one of the webs of packaging material. The heating step is advantageous in that it may be arranged to heat the web(s) of packaging material to a specific temperature where the plastic of the web(s) become adhesive, thereby improving the seal.

The method may comprise a step of pressing the two webs of packaging material together. The pressing step is advantageous in that it may improve the quality of the weld and keep the webs aligned.

The method may comprise a step of cutting the existing web of packaging material at a slanted angle. The cutting existing web step advantageous in that the slanted cut increases the integrity of the packaging container.

The method comprises a step of adding an extra rubber cap before the sealing step. The adding step is advantageous in that the extra rubber cap adds more adhesives to the seal, thereby improving it.

Here, the extra rubber cap is attached to at least one of a trailing end edge of the existing web and a leading end edge of the incoming web.

The method may comprise at least one step of locking the position of at least one of the webs of packaging material. The locking step is advantageous in that it keeps the web(s) of packaging material in place once aligned.

The method may comprise at least one step of unlocking the position of at least one of the webs of packaging material. The unlocking step is advantageous in that it ensures easy removal of cut pieces and the manufacturing to proceed.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1a is a schematic side view of a basic system for handling a web of packaging material,
Fig. 1b is a side view of the system shown in Fig. 1a during a cutting step of a splicing method according to an embodiment,
Fig. 1c is a side view of the system shown in Figs. 1a-b in a sealing step of the splicing method,
Fig. 2 is a top view of a web of packaging material for use in a splicing method according to various embodiments,
Fig. 3 is a top view of a slice table according to one embodiment,
Fig. 4 is an exploded isometric view of a sealer trolley according to one embodiment,
Fig. 5 is a side view of the sealer trolley shown in Fig. 4,
Fig. 6 is a side view of a cutting unit of the sealer trolley shown in Fig. 4 during operation,
Fig. 7 is a side view of a pressure unit of the sealer trolley shown in Fig. 4 during operation, and
Fig. 8 is a schematic view of a splicing method according to an embodiment.

### Detailed Description

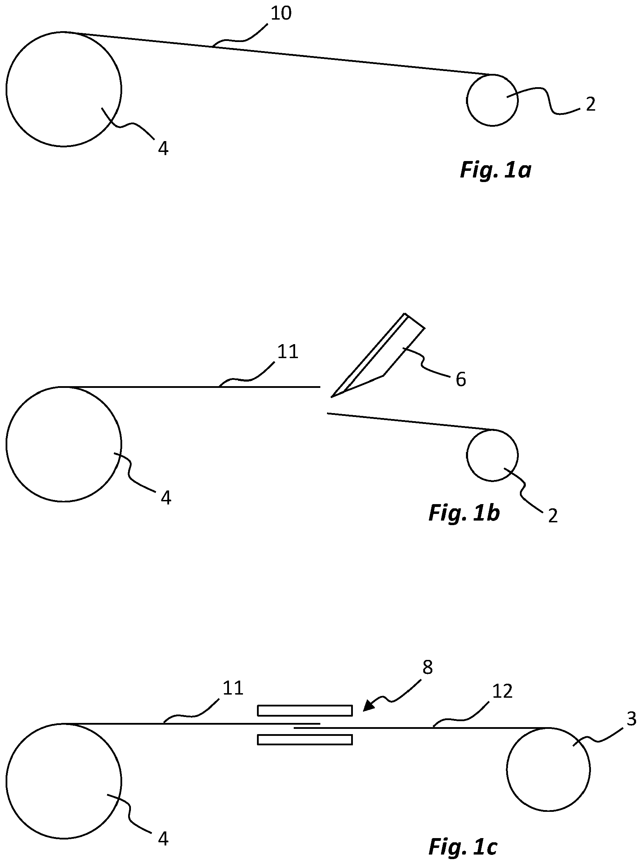

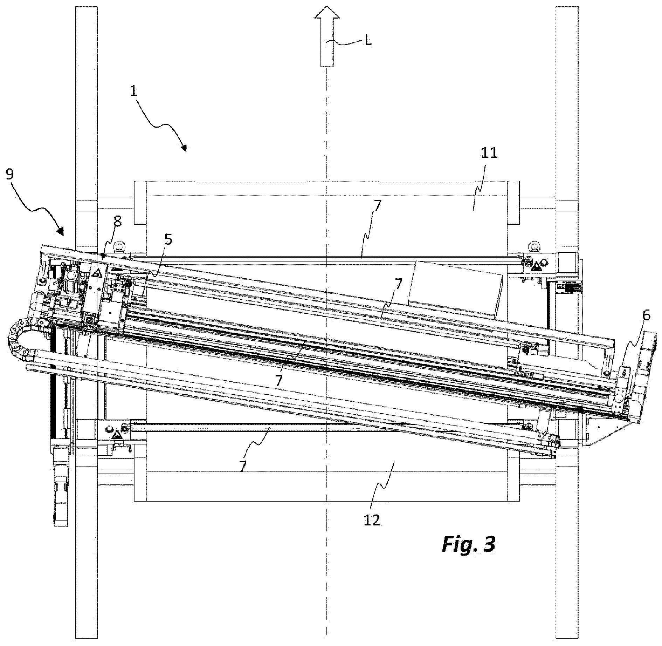

Figs. 1a-c illustrate in ultimate simplicity the setup of a splicing operation of the present disclosure. What is shown is a web 10 of packaging material being wound from a first supply reel 2 to a second receiving reel 4. Between the first and the second reel 2, 4 the web 10 may pass over and under a number of rollers and guides (not shown). Furthermore, at least one cutting and sealing device 6, 8 (see Figs. 1b-c) is arranged along the path of the packaging material web 10. The cutting and sealing device 6, 8, shown schematically in Fig. 1b-c, forms part of a splice table 1 which will be later described in more detail with reference to Fig. 3.

When the first supply reel 2 is almost exhausted, the material web 10 is cut transversely as is shown in Fig. 1b. A leading end of a web 12 unwound from a new, second supply reel 3 is superimposed on the trailing end of the web 11 of the receiving reel 4 as is shown in Fig. 1c. As is further indicated in Fig. 1c the leading end of the web 12 from the second supply reel 3 is then spliced to the trailing end of the web 11 of the receiving reel 4 so that material web handling can be continued without interruption.

The sealing may e.g. be performed by using a combination of heat and pressure during a pre-set period of time. In one or more embodiments the heat is applied from the side of the packaging material that subsequently will be directed towards the interior of a packaging container formed from the packaging material; it should, however, be realized that heating may be done in various ways and from various directions as long as the desired effect is accomplished.

The sealing device 8, in particular a sealer trolley providing the heat and pressure, may be pneumatically controlled, hydraulically controlled or spring biased so that a well-defined force is applied onto the area to be joined.

Tail and head are used to describe the ends to be fused, namely the trailing end of the first web 11 of packaging material and the leading end of the second web 12 of packaging material respectively.

It should be realized that the general description presented above could be easily modified to operate for doctoring purposes. In such cases the second supply reel 3 of Fig. 1c is replaced by the original first supply reel 2 of Figs. 1a-b, whereby two transversal cuts of the material web 10 are performed to remove an unwanted piece of the material web 10. Hence the first web 11 of packaging material and the second web 12 of packaging material may be the same web 10 of packaging material having been cut in a doctoring operation where a defect segment has been removed.

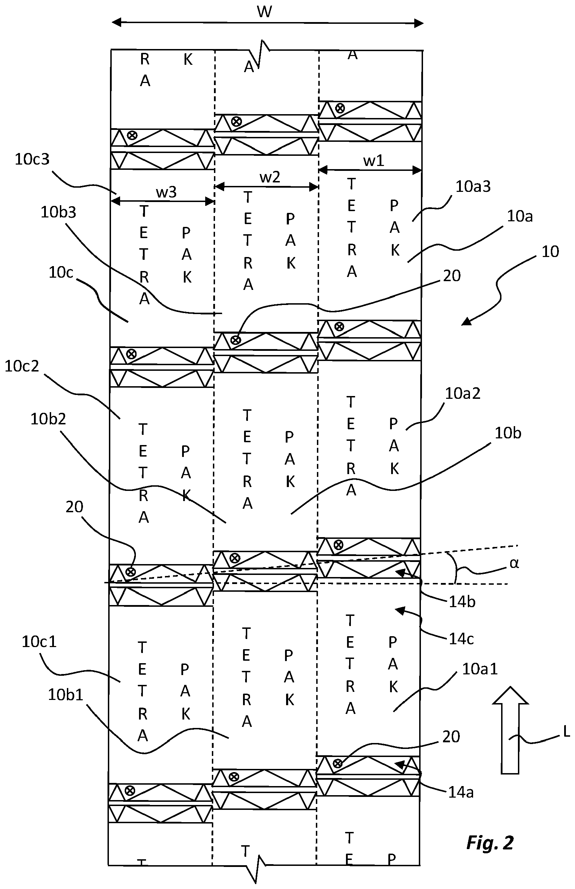

For facilitating the understanding of the splice table 1 to be described later, some general description of a web 10 of packaging material will be given with reference to Fig. 2. The web 10 of packaging material is assumed to be fed in a longitudinal direction L, indicated by the block arrow in Fig. 2. Further, as can be seen in Fig. 2, the web 10 of packaging material is a full-width web, later to be cut into a plurality of individual webs 10a, 10b, 10c. Each individual web 10a-c is then to be fed to a filling machine, wherein carton-based packages are produced from the web 10a-c and filled with content. Although the web 10 includes three parallel transversal sections 10a-c for later forming the individual webs 10a-c, it should be realized that other numbers of transversal sections 10a-c could of course be realized.

Typically, the web 10 has a width W of approximately 1.6 m. Each transversal section 10a-c has a width w1-3 such that W=w1+w2+w3. The transversal section widths w1-3 may not necessarily be equal.

Each transversal section 10a-c is processed such that individual packages may be formed from it. Hence, each transversal section 10a-c comprises a vast amount of longitudinal sections 10a1, 10a2, 10a3, 10b1, 10b2, 10b3, 10c1, 10c2, 10c3. Typically, each transversal section 10a-c includes several thousands of consecutive longitudinal sections.

Each longitudinal section 10a1-10c3 is configured to form an individual package. With reference to longitudinal section 10a1, each longitudinal section has a lower area 14a provided with crease lines to form a bottom end of the final package, an upper area 14b provided with crease lines to form an upper end of the final package, and a centre area 14c to form the longitudinal body of the final package.

At least one mark 20 can be provided somewhere at each longitudinal section 10a1-10c3. The at least one mark 20 may e.g. be a visual mark, or an embedded mark e.g. including magnetic particles that may be detected by associated magnetic sensor circuitry, or combinations thereof. In the case of a magnetic embedded mark, it should be realized that such a mark may be detected optically, as the magnetic particles will provide contrast relative the surrounding packaging material. Preferably the position of the at least one mark 20 is well-defined, e.g. with reference to the lateral edge of the web 10, the longitudinal distance to the end of the associated or adjacent crease line area 14a, 14b, etc.

As can be seen in Fig. 2, the transversal sections 10a-c are staggered relative to each other by an angle α. The reasons for such a staggered configuration may vary, but in some cases it may be advantageous to avoid periodic vibrations in the creasing rollers, i.e. the rollers being provided with crease line patterns, which may occur if the crease lines are arranged on a common transversal area.

Some general comments on crease lines will now be presented. Crease lines are folding indications pressed into the packaging material, and when the packaging material is intended for the formation of packaging containers a pattern of crease lines will be "printed" onto the packaging material. Looking at a packaging container, the majority of crease lines are located in the area from which the bottom and top of the packaging container is to be formed, i.e. areas 14a-b, and therefore the transversal splicing cut will be made in an area corresponding to the main body 14c of the packaging container. The exact position is not that crucial and the method may be applied to a material not having any crease lines. The dynamics and use of crease line is an area of research itself, and for the purposes of the present disclosure, the skilled person will have enough knowledge even without the above short explanation. There is one additional reason for making the splicing cut somewhere between the top and bottom of the packaging container to be formed. That reason relates to that a package being formed from a section of packaging material comprising a splice is usually discarded. By having the cut in the middle of the container, it is ensured that only one single packaging container is affected by the splice, and thus only one packaging container is discarded. This fact may raise the question as of why the performance of the splice is so important if the resulting packaging container is discarded anyway. One answer is that the package is not discarded before it has been filled, since that is the way most filling systems operate. Any leakage or other malfunction before will therefore cause significant problems, and for that reason the splice need to be intact, and able to withstand liquid pressure.

The suitable position for the splicing cut may in one or more embodiments correspond to an area where the splicing cut will intersect a minimum amount of crease lines, and the splicing cut angle relative the transversal direction of the web 10 may thus be equal to, or close to, the staggering angle α.

Fig. 3 shows a splice table 1 according to an embodiment. The splice table 1 is used to manually splice an incoming web 12 to an existing web 11. When a splicing operation occurs, it is important to align the incoming web 12 with the existing web 11. This is because it is likely that later in the manufacturing process, the web 10 will be automatically folded into a packaging container. A slight misalignment will then cause possibly thousands of packaging containers to have defects. For this reason, a manual splice table 1 may require an operator to align the webs 11, 12.

To this end, the splice table 1 comprises locking units 7. A locking unit 7 is any unit configured to lock the position of a web 10 of packaging material, for example using clasps or vacuum. This embodiment comprises four locking units 7, however the skilled person will realise that any number of locking units 7 are possible. In the shown splice table 1, the two upper locking units 7 are arranged to lock the position of the existing web 11 in place and the two bottom locking units 7 are arranged to lock the position of the incoming web 12 in place, where two of the locking units 7 are slanted. These slanted locking units 7 are a part of a splice unit 9, which is movable to preferably be at an angle close to, preferably same with, the staggering angle α, so that the splicing cut will intersect a minimum amount of crease lines, as discussed above.

The splice table 1 further comprises a cutting device 6. The cutting device 6 is a manually operated blade. The cutting device 6 is arranged to move along a guide on the splice unit 9 and cut the existing web 11 at a slanted angle β'. By the way, the cutting device 6 may be operated in an automated manner also.

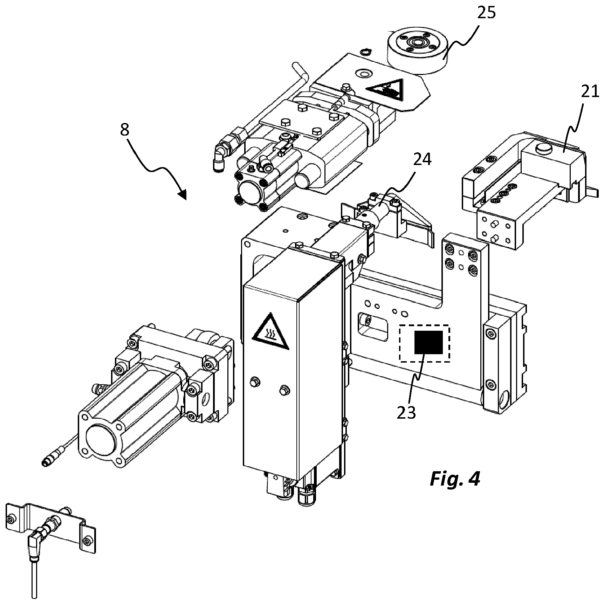

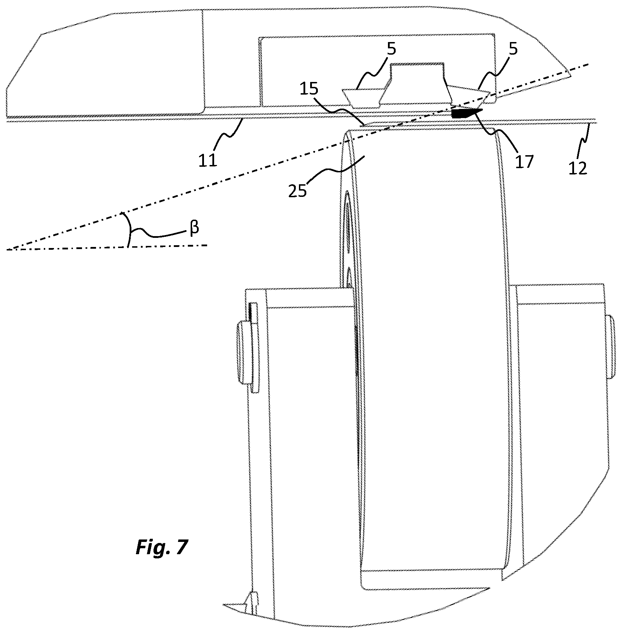

The splice table 1 also comprises a sealer trolley 8, which will be discussed further with regards to Figs. 4-7. The sealer trolley 8 is arranged to move along a guide on the splice unit 9. Along the path of the sealer trolley 8, on the other side of the webs 11, 12 are two anvil units 5. The skilled person will realise that any number of anvil units 5 are possible. The anvil units 5 will be discussed further with regards to Fig. 7.

Fig. 4 shows an exploded view of a sealer trolley 8 according to one embodiment. This version of the sealer trolley 8 has three operative units, a cutting unit 21, a heating unit 24 and a pressure unit 25. While this embodiment has these three distinct units, more units are possible and more than one functionality may be combined into a single unit, such as a heating and pressuring unit 24, 25. The three operative units 21, 24, 25 are arranged in series and in a specific order. They are arranged to move along the web(s) 11, 12 of packaging material such that the cutting unit 21 is operated first, then the heating unit 24 and lastly the pressure unit 25.

The sealer trolley 8 may be manually operated, however this particular embodiment is configured to move automatically using a motor 23. The motor 23 may be any kind of motor such as an electrical motor.

The heating unit 24 may be any unit configured to apply heat such as a hot air supply. The heating unit 24 is preferably configured to heat at least one of the webs 11, 12 of packaging material to a temperature where the plastic layers of the packaging material starts to melt, but not high enough to damage the packaging material. The melted plastic acts as an adhesive, sealing the webs 11, 12 together. The motor 23 is preferably configured to move the sealer trolley 8 at a speed such that the heating unit 24 has time to allow the packaging material to reach a desired temperature.

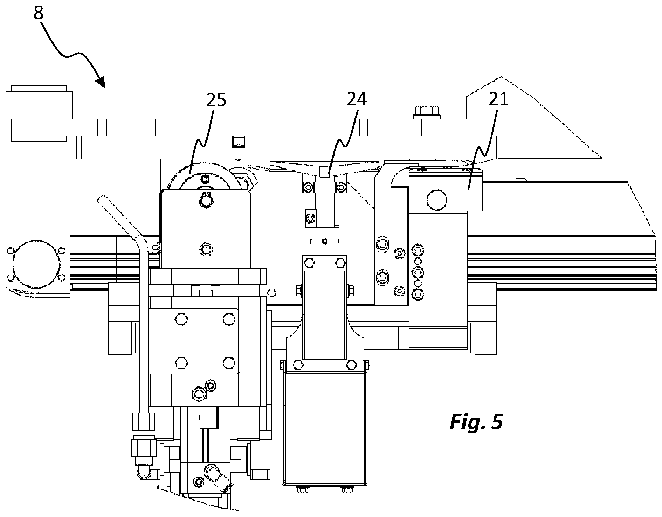

Fig. 5 shows a side view of the sealer trolley 8. The three operative units 21, 24, 25 are arranged in series and the sealer trolley 8 is adapted to move to the right in the figure when operating.

The sealer trolley 8 is configured to be selectively arranged in an active position where the cutting unit 21 is arranged to cut the incoming web 12 of packaging material and a passive position where the cutting unit 21 is arranged at a distance from the incoming web 12 of packaging material. The sealer trolley 8 of Fig. 5 is arranged in an active position.

The sealer trolley 8 may be configured to be arranged in the active position when moving in one direction (right in Fig. 5) along the width of the incoming web 12 of packaging material, and in the passive position when moving in the opposite direction (left in Fig. 5) along the width of the incoming web 12 of packaging material.

In order to put the sealer trolley 8 in the passive position, it may be arranged with a hinge to bend the operative units 21, 24, 25 away from the incoming web 12. Moving between the active and passive positions may be manual or a motor, for instance the motor 23, may move the sealer trolley 8 to the passive position once the sealer trolley 8 has reached the end of the incoming web 12.

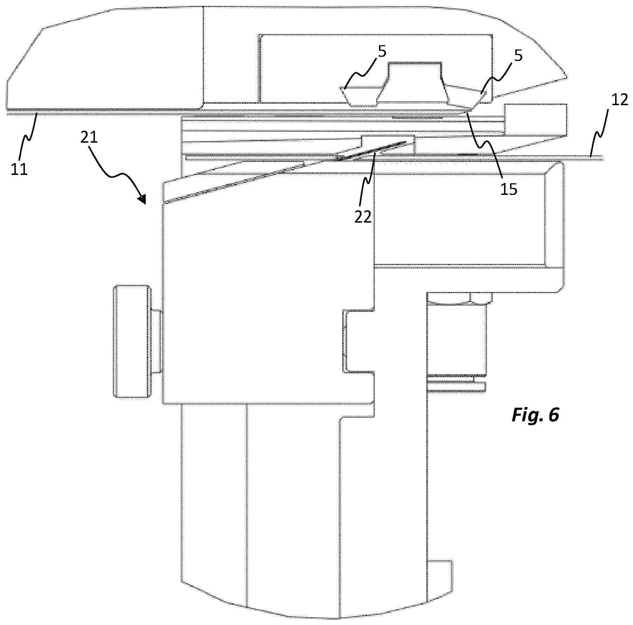

Fig. 6 shows a cutting unit 21 according to an embodiment. The cutting unit 21 comprises a blade 22 arranged to cut the incoming web 12 of packaging material at a slanted angle β. This angle β does not need to be the same angle as the slanted angle β' that the cutting device 6 cuts the existing web 11 at, however it is preferable if they are similar. The slanted angle β of the cut incoming web 12 is preferably around 10-20 degrees, even more preferably 15 degrees. The blade 22 is a razor blade.

Fig. 7 shows a pressure unit 25 according to an embodiment. The pressure unit 25 is a wheel arranged to roll along the direction of movement of the sealer trolley 8. The wheel 25 may be driven by the movement of the sealer trolley 8 or it may drive the movement of the sealer trolley 8 using the motor 23. The wheel 25 is preferably wide enough to cover both transversal edges 15, 17 of the webs 11, 12.

The pressure unit 25 may be configured to apply pressure using any number of known configurations, for example spring means or a hydraulic press. The pressure applied by the pressure unit 25 ensures that the two webs 11, 12 seal together properly. After the heating unit 24 has melted plastic, the pressure unit 25 presses the two webs 11, 12 together such that when the plastic solidifies, the webs 11, 12 are sealed together into one web 10. The pressure further helps with the alignment of the two webs 11, 12, as it removes any creases that may cause misalignment.

The pressure unit 25 is received on the other side of the webs 11, 12 by at least one anvil unit 5. The anvil units 5 are arranged along the running path of the sealer trolley 8 and configured to receive pressure from the pressure unit 25. The anvil units 5 are preferably made from a flexible material such as plastic or silicone. Some of the anvil units 5 may be slanted in order to guide at least one web 11, 12 of packaging material as the pressure unit 25 applies pressure. This allows for a more precise pressure application and may direct the pressure at target areas such as the transversal edges 15, 17 of the webs 11, 12.

At least one of the anvil units 5 may be aligned with the transversal edge 15 of one of the webs 11, 12. This helps guide the alignment of the webs 11, 12 as they are pressed together by the pressure unit 25 and defines the limits of the weld.

Fig. 7 further shows a rubber cap 17 arranged on the transversal edge 15 of the existing web 11. This is added before the heating step 37, preferably directly after the cutting device 6 has cut the existing web 11. The rubber cap 17 is intended to be melted by the heating unit 24 and acts as an additional source of adhesives to improve the seal of the webs 11, 12. The rubber cap 17 may have a predetermined melting point that ensures good adhesive properties after the heating step 37.

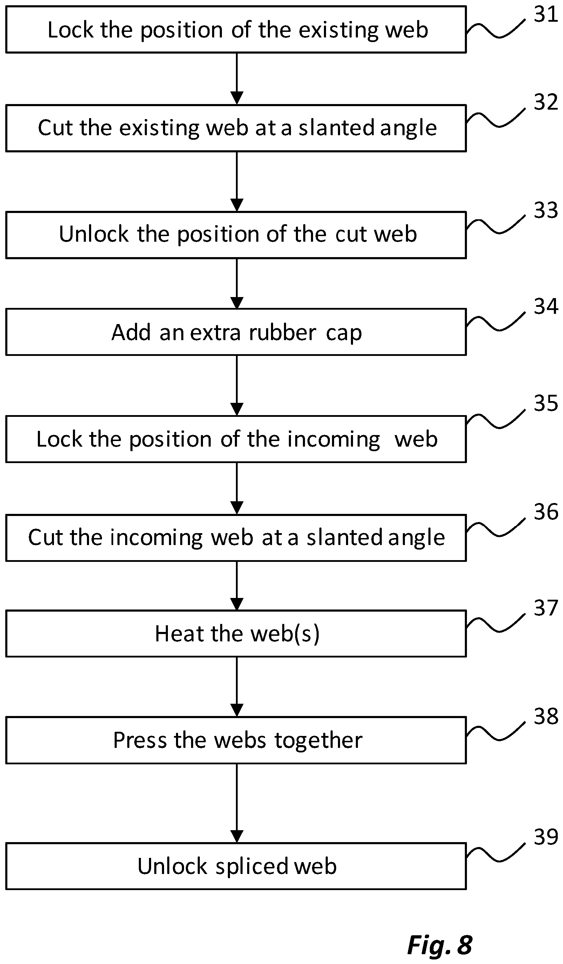

Fig. 8 shows a schematic view of a splicing method according to an embodiment. Fig. 8 is merely one example of a splicing method according to the invention. While the method steps 31-39 are shown in a specific order, they may be made in any order and repeated as many times as needed, as long as this remains within the scope of the appended claims. The method steps 31-39 may be skipped or replaced, as long as this remains within the scope of the appended claims. For instance, the heating 37 and pressing 38 steps may be replaced with an alternative sealing step.

The method of Fig. 8 begins with a locking step 31. In this step, the position of the existing web 11 is locked in order to ensure a clean cut in the next step. This is preferably done by the locking units 7 described in relation to Fig. 3. The next step is a cutting step 32, where the existing web 11 is cut by the cutting device 6 at a slanted angle β'. An unlocking step 33 follows next, where the two bottom locking units 7 shown in Fig. 3 are unlocked to release the position of the unwanted remainder of the existing web 11 of packaging material, for instance the small remainder of a nearly empty roll 2. At this point it is performed an adding step 34, which comprises adding an extra rubber cap 17 to the transversal edge 15 of one of the webs 11, 12, preferably the existing web 11.

The method of Fig. 8 continues with the incoming web 11 entering the splice table 1. The next step is locking 35 the position of the incoming web 11, for example using the two bottom locking units 7. At this point, it is important to align the two webs 11, 12, perhaps by studying their visual patterns. Some overlap between the two webs 11, 12 is useful as the transversal edge 15 of the incoming web 11 should be slanted, which may require cutting 36 a small portion of the incoming web 11.

Once the two webs 11, 12 are aligned and the incoming web 11 is locked, cutting 36 of the incoming web 12 may commence. The cutting 36 of the incoming web 12 will be performed by the cutting unit 21 of the sealer trolley 8 at a slanted angle. At least one of the webs 11, 12 may then be heated 37 by the heating unit 24. The two webs 11, 12 may then undergo the step of pressing 38 the webs 11, 12 of packaging material together, creating a seal.

The final step of the method of Fig. 8 is unlocking 39 the newly spliced web 10 by opening all of the locking units 7, allowing the spliced web 10 to continue in the manufacturing process.

From the description above follows that, although various embodiments of the invention have been described and shown, the invention is not restricted thereto, but may also be embodied in other ways within the scope of the subject-matter defined in the following claims.

## Claims

1. A splice table (1) comprising a sealer trolley (8), wherein the sealer trolley (8) is configured to seal an incoming web (12) of packaging material to an existing web (11) of packaging material during a splicing operation on the splice table (1), the sealer trolley (8) comprising:
a cutting unit (21) having a blade (22) arranged to cut the incoming web (12) of packaging material at a slanted angle (β)
**characterized in that** the cutting unit (21) comprises a razor blade (22).

2. The splice table (1) according to claim 1, wherein the sealer trolley (8) comprises a motor (23) for automatically moving the sealer trolley (8) along the entire width of the incoming web (12) of packaging material.

3. The splice table (1) according to claim 1 or 2, wherein the sealer trolley (8) comprises a heating unit (24).

4. The splice table (1) according to any one of the preceding claims, wherein the sealer trolley (8) comprises a pressure unit (25).

5. The splice table (1) according to claim 4, wherein the pressure unit (25) is in the form of a wheel arranged to roll along the direction of movement of the sealer trolley (8).

6. The splice table (1) according to any one of the preceding claims, wherein the slanted angle (β) is 10-20 degrees, preferably 15 degrees.

7. The splice table (1) according to any one of the preceding claims, wherein the sealer trolley (8) is configured to be selectively arranged in an active position where the cutting unit (21) is arranged to cut the incoming web (12) of packaging material and a passive position where the cutting unit (21) is arranged at a distance from the incoming web (12) of packaging material.

8. The splice table (1) according to claim 7, wherein the sealer trolley (8) is further configured to be arranged in the active position when moving in one direction along the width of the incoming web (12) of packaging material, and in the passive position when moving in the opposite direction along the width of the incoming web (12) of packaging material.

9. The splice table (1) according to any one of the preceding claims, further comprising a cutting device (6) arranged to cut the existing web (11) of packaging material at a slanted angle (β').

10. The splice table (1) according to claim 9, wherein the cutting device (6) is manually operated.

11. The splice table (1) according to any one of claims 4-10, further comprising at least one anvil unit (5) arranged along the running path of the sealer trolley (8) and being configured to receive pressure from a pressure unit (25) of the sealer trolley (8).

12. The splice table (1) according to claim 11, wherein at least one anvil unit (5) is slanted in order to guide at least one web (11, 12) of packaging material as the pressure unit (25) applies pressure.

13. A method for splicing an incoming web (12) of packaging material to an existing web (11) of packaging material, the method comprising the steps of:
cutting (36) the incoming web (12) of packaging material at a slanted angle (β);
sealing (37, 38) the two webs (11, 12) of packaging material
and **characterized by** adding (34) an extra rubber cap (17) to at least one of a trailing end edge of the existing web (11) and a leading end edge of the incoming web (12) before the sealing step (37, 38).

## Patentansprüche

1. Spleißtisch (1), umfassend einen Versiegelungswagen (8), wobei der Versiegelungswagen (8) ausgestaltet ist, um eine eingehende Bahn (12) aus Verpackungsmaterial während eines Spleißvorgangs auf dem Spleißtisch (1) an eine vorhandene Bahn (11) aus Verpackungsmaterial zu siegeln, wobei der Versiegelungswagen (8) umfasst:
eine Schneideinheit (21) mit einer Klinge (22), die angeordnet ist, um die eingehende Bahn (12) aus Verpackungsmaterial in einem schrägen Winkel (β) zu schneiden,
**dadurch gekennzeichnet, dass** die Schneideinheit (21) eine Rasierklinge (22) umfasst.

2. Spleißtisch (1) nach Anspruch 1, wobei der Versiegelungswagen (8) einen Motor (23) zum automatischen Bewegen des Versiegelungswagens (8) entlang der gesamten Breite der eingehenden Bahn (12) aus Verpackungsmaterial umfasst.

3. Spleißtisch (1) nach Anspruch 1 oder 2, wobei der Versiegelungswagen (8) eine Heizeinheit (24) umfasst.

4. Spleißtisch (1) nach einem der vorhergehenden Ansprüche, wobei der Versiegelungswagen (8) eine Druckeinheit (25) umfasst.

5. Spleißtisch (1) nach Anspruch 4, wobei die Druckeinheit (25) in Form eines Rades vorliegt, das angeordnet ist, um entlang der Bewegungsrichtung des Versiegelungswagens (8) zu rollen.

6. Spleißtisch (1) nach einem der vorhergehenden Ansprüche, wobei der schräge Winkel (β) 10 bis 20 Grad, vorzugsweise 15 Grad beträgt.

7. Spleißtisch (1) nach einem der vorhergehenden Ansprüche, wobei der Versiegelungswagen (8) ausgestaltet ist, um selektiv in einer aktiven Position, wo die Schneideinheit (21) angeordnet ist, um die eingehende Bahn (12) des Verpackungsmaterials zu schneiden, und einer passiven Position, wo die Schneideinheit (21) in einem Abstand zu der eingehenden Bahn (12) des Verpackungsmaterials angeordnet ist, angeordnet zu werden.

8. Spleißtisch (1) nach Anspruch 7, wobei der Versiegelungswagen (8) des Weiteren ausgestaltet ist, um in der aktiven Position, wenn er sich in einer Richtung entlang der Breite der eingehenden Bahn (12) des Verpackungsmaterials bewegt, und in der passiven Position, wenn er sich in der Gegenrichtung entlang der Breite der eingehenden Bahn (12) des Verpackungsmaterials bewegt, angeordnet zu werden.

9. Spleißtisch (1) nach einem der vorhergehenden Ansprüche, des Weiteren umfassend eine Schneidvorrichtung (6), die angeordnet ist, um die vorhandene Bahn (11) des Verpackungsmaterials in einem schrägen Winkel (β') zu schneiden.

10. Spleißtisch (1) nach Anspruch 9, wobei die Schneidvorrichtung (6) manuell betrieben wird.

11. Spleißtisch (1) nach einem der Ansprüche 4 bis 10, des Weiteren umfassend mindestens eine Ambosseinheit (5), die entlang des Laufwegs des Versiegelungswagens (8) angeordnet ist und ausgestaltet ist, um Druck von einer Druckeinheit (25) des Versiegelungswagens (8) zu empfangen.

12. Spleißtisch (1) nach Anspruch 11, wobei mindestens eine Ambosseinheit (5) schräg ist, um mindestens eine Bahn (11, 12) Verpackungsmaterial zu führen, wenn die Druckeinheit (25) Druck ausübt.

13. Verfahren zum Spleißen einer eingehenden Bahn (12) aus Verpackungsmaterial an eine vorhandene Bahn (11) aus Verpackungsmaterial, wobei das Verfahren die Schritte umfasst:
Schneiden (36) der eingehenden Bahn (12) des Verpackungsmaterials in einem schrägen Winkel (β);
Versiegeln (37, 38) der beiden Bahnen (11, 12) aus Verpackungsmaterial,
und **dadurch gekennzeichnet, dass** mindestens einer von einer hinteren Endkante der vorhandenen Bahn (11) und einer vorderen Endkante der eingehenden Bahn (12) vor dem Versiegelungsschritt (37, 38) eine zusätzliche Gummikappe (17) zugefügt (34) wird.

## Revendications

1. Table d'assemblage (1) comprenant un chariot de scelleuse (8), dans laquelle le chariot de scelleuse (8) est configuré pour sceller une bande entrante (12) de matériau d'emballage avec une bande existante (11) de matériau d'emballage pendant une opération d'assemblage sur la table d'assemblage (1), le chariot de scelleuse (8) comprenant :
une unité de coupe (21) comportant une lame (22) conçue pour couper la bande entrante (12) de matériau d'emballage selon un angle oblique (β)
**caractérisée en ce que** l'unité de coupe (21) comprend une lame de rasoir (22).

2. Table d'assemblage (1) selon la revendication 1, dans laquelle le chariot de scelleuse (8) comprend un moteur (23) pour déplacer automatiquement le chariot de scelleuse (8) sur toute la largeur de la bande entrante (12) de matériau d'emballage.

3. Table d'assemblage (1) selon la revendication 1 ou 2, dans laquelle le chariot de scelleuse (8) comprend une unité de chauffage (24).

4. Table d'assemblage (1) selon l'une quelconque des revendications précédentes, dans laquelle le chariot de scelleuse (8) comprend une unité de pression (25).

5. Table d'assemblage (1) selon la revendication 4, dans laquelle l'unité de pression (25) se présente sous la forme d'une roue conçue pour rouler le long de la direction de déplacement du chariot de scelleuse (8).

6. Table d'assemblage (1) selon l'une quelconque des revendications précédentes, dans laquelle l'angle oblique (β) est de 10 à 20 degrés, de préférence de 15 degrés.

7. Table d'assemblage (1) selon l'une quelconque des revendications précédentes, dans laquelle le chariot de scelleuse (8) est configuré pour être agencé sélectivement dans une position active dans laquelle l'unité de coupe (21) est conçue pour couper la bande entrante (12) de matériau d'emballage et une position passive dans laquelle l'unité de coupe (21) est agencée à distance de la bande entrante (12) de matériau d'emballage.

8. Table d'assemblage (1) selon la revendication 7, dans laquelle le chariot de scelleuse (8) est en outre configuré pour être agencé dans la position active lorsqu'il se déplace dans une direction le long de la largeur de la bande entrante (12) de matériau d'emballage, et dans la position passive lorsqu'il se déplace dans la direction opposée le long de la largeur de la bande entrante (12) de matériau d'emballage.

9. Table d'assemblage (1) selon l'une quelconque des revendications précédentes, comprenant en outre un dispositif de coupe (6) conçu pour couper la bande existante (11) de matériau d'emballage selon un angle oblique (β').

10. Table d'assemblage (1) selon la revendication 9, dans laquelle le dispositif de coupe (6) est actionné manuellement.

11. Table d'assemblage (1) selon l'une quelconque des revendications 4 à 10, comprenant en outre au moins une unité d'enclume (5) agencée le long du chemin de roulement du chariot de scelleuse (8) et étant configurée pour recevoir une pression d'une unité de pression (25) du chariot de scelleuse (8).

12. Table d'assemblage (1) selon la revendication 11, dans laquelle au moins une unité d'enclume (5) est oblique afin de guider au moins une bande (11, 12) de matériau d'emballage à mesure que l'unité de pression (25) applique une pression.

13. Procédé d'assemblage d'une bande entrante (12) de matériau d'emballage à une bande existante (11) de matériau d'emballage, le procédé comprenant les étapes de :
coupe (36) de la bande entrante (12) de matériau d'emballage selon un angle oblique (β) ;
scellement (37, 38) des deux bandes (11, 12) de matériau d'emballage
et **caractérisé par** l'ajout (34) d'un capuchon en caoutchouc supplémentaire (17) à au moins l'un d'un bord d'extrémité arrière de la bande existante (11) et d'un bord d'extrémité avant de la bande entrante (12) avant l'étape de scellement (37, 38).
